Europäisches Patentamt

**European Patent Office**

**Office européen des brevets**

(19)

(11) Numéro de publication : **0 039 284**
**B1**

(12) # FASCICULE DE BREVET EUROPÉEN

(45) Date de publication du fascicule du brevet :
21.03.84

(21) Numéro de dépôt : 81400643.3

(22) Date de dépôt : 23.04.81

(51) Int. Cl.³ : **G 02 C   7/02**

(54) **Lentille ophtalmique progressive.**

(30) Priorité : 30.04.80 FR 8009757

(43) Date de publication de la demande :
04.11.81 Bulletin 81/44

(45) Mention de la délivrance du brevet :
21.03.84 Bulletin 84/12

(84) Etats contractants désignés :
**DE FR GB IT NL**

(56) Documents cités :
**FR-A- 1 411 976**
**US-A- 2 405 989**
**US-A- 3 010 366**

(73) Titulaire : **ESSILOR INTERNATIONAL Cie Générale
d'Optique**
**1 Rue Thomas Edison Echat 902**
**F-94028 Creteil Cedex (FR)**

(72) Inventeur : **Legendre, Serge, Mr.**
**19 Rue du Cap**
**F-94000 Creteil (FR)**

(74) Mandataire : **CABINET BONNET-THIRION**
**95 Boulevard Beaumarchais**
**F-75003 Paris (FR)**

Jouve, 18, rue St-Denis, 75001 Paris, France

Lentille ophtalmique progressive

La présente invention concerne d'une manière générale les lentilles ophtalmiques adaptées aussi bien à une vision de loin qu'à une vision de près, notamment pour une correction de la presbytie.

Ainsi qu'on le sait, il y a deux grandes catégories de lentilles ophtalmiques répondant à ce but.

Il y a tout d'abord les lentilles ophtalmiques à double foyer dans lesquelles, à une première zone à puissance focale constante, qui forme pour l'essentiel la lentille, et qui est adaptée à une vision de loin, est optiquement superposée, localement, à la partie inférieure de la lentille, en y formant un segment, une deuxième zone à puissance focale constante, pour la vision de près.

Ces lentilles ophtalmiques à double foyer, qui sont bien adaptées aux usagers ayant une activité sédentaire ne nécessitant pas de fréquents passages d'une vision de près à une vision de loin, et réciproquement, ont pour avantage d'offrir, tant pour la vision de loin que pour la vision de près, des champs de vision correcte étendus.

Pour une vision statique, elles offrent donc un très bon confort visuel.

Mais elles ont pour inconvénient de présenter, à la frontière supérieure de leur deuxième zone à puissance focale constante formant la limite séparant cette deuxième zone de la première, une variation discontinue de puissance dont il résulte, pour la plupart des lentilles de ce type, lors du passage d'une vision de près à une vision de loin, et réciproquement, un saut d'image désagréable, d'autant plus accentué que cette variation discontinue de puissance est importante.

La deuxième catégorie de lentilles ophtalmiques adaptées aussi bien à une vision de loin qu'à une vision de près est celle des lentilles ophtalmiques dites progressives, c'est-à-dire des lentilles ophtalmiques comportant une zone à puissance focale rendue progressivement variable le long de l'un au moins de ses méridiens, par variation du rayon de courbure le long d'un tel méridien.

En pratique, la zone à puissance focale progressivement variable forme usuellement la partie inférieure de la lentille, pour la vision de près, tandis que la partie supérieure de celle-ci forme une zone à puissance focale constante adaptée à la vision de loin, la zone à puissance focale progressivement variable se raccordant en continu à la zone à puissance focale constante et rajoutant progressivement à la puissance de celle-ci un surcroît de puissance dont la valeur, mesurée sur le méridien principal, entre la frontière supérieure de cette zone à puissance focale progressivement variable et la frontière inférieure utile de celle-ci, correspond à la correction supplémentaire nécessaire à la vision de près et est communément dite « addition ».

Ces lentilles ophtalmiques progressives ont pour avantage de permettre un passage d'une vision de près à une vision de loin, et réciproquement, avec une variation continue de puissance, sans saut d'image.

Elles offrent donc un excellent confort en vision dynamique, et conviennent tout particulièrement de ce fait aux usagers dont l'activité nécessite de fréquents passages d'une vision de près à une vision de loin, et réciproquement.

Mais elles présentent divers inconvénients, et notamment celui de n'offrir, pour une vision intermédiaire entre la vision de loin et la vision de près, qu'un champ de vision correcte relativement étroit de part et d'autre du méridien principal, ce champ de vision correcte étant flanqué de zones latérales à aberrations plus ou moins accentuées, qui perturbent la vision, et qui sont d'autant plus gênantes que l'addition de puissance apportée par la zone à puissance focale progressivement variable est importante.

La première invention a d'une manière générale pour objet une lentille ophtalmique progressive dans laquelle ces inconvénients se trouvent avantageusement minimisés.

De manière plus précise, la lentille ophtalmique progressive suivant l'invention, qui est donc du genre comportant une zone supérieure à puissance focale constante et une zone inférieure possédant une zone adjacente à la zone supérieure et à puissance focale progressivement variable le long de l'un au moins de ses méridiens, zone inférieure sur une portion de laquelle un segment additionnel se trouve optiquement superposé, est caractérisée en ce que le segment additionnel apporte localement un surcroît de puissance par rapport à la puissance de ladite zone à puissance focale progressivement variable, avec, à la frontière supérieure entre la zone à puissance focale progressivement variable et le segment additionnel, une variation discontinue de puissance.

Certes, dans le brevet FR-A-1.411.976, il est proposé une lentille ophtalmique à la zone inférieure de laquelle est localement superposé optiquement un segment additionnel de puissance focale rendue progressivement variable, le long de l'un au moins de ses méridiens, grâce à un changement à variation continue de l'indice de réfraction du verre.

En pratique, ce segment additionnel étant superposé à un verre classique, dont la face opposée présente une courbure appropriée aux puissances en dioptries désirées, une telle lentille ophtalmique s'apparente géométriquement bien plus à une lentille à double foyer classique qu'à une lentille progressive au sens ci-dessus, même si, grâce à ce segment additionnel, sa zone inférieure possède effectivement une zone à puissance focale progressive.

Il n'en est pas de même avec la lentille ophtalmique progressive suivant l'invention.

Suivant une forme possible de réalisation de l'invention, le segment additionnel et la zone à puissance focale progressivement appartiennent à un même palet, celui-ci constituant à lui seul la lentille concernée.

Par exemple, réalisé en un matériau différent de celui constitutif du reste de la lentille, ce segment est fusionné au sein de celle-ci ; en variante, réalisé dans le même matériau que la lentille, il forme une excroissance à la surface de celle-ci.

Suivant une autre forme possible de réalisation, le segment additionnel appartient à un palet de base, et la zone à puissance progressivement variable à une pellicule de surface superposée à celui-ci, l'ensemble dudit palet de base et de ladite pellicule de base constituant la lentille concernée.

Quoi qu'il en soit, dans la lentille ophtalmique progressive suivant l'invention, l'addition de puissance totale nécessaire au passage d'une vision de loin à une vision de prés de trouve avantageusement répartie entre une zone à puissance focale progressivement variable et un segment additionnel superposé à celle-ci.

Il en résulte, s'agissant de la zone à puissance focale progressivement variable, que l'addition de puissance due à cette seule zone est relativement réduite, et que, par conséquent, les zones latérales qui la flanquent ne présentant dès lors que des aberrations atténuées, le champ de vision correcte se trouve élargi et le confort de l'usager amélioré.

Il en résulte également, s'agissant du segment additionnel mis en œuvre, que la variation discontinue de puissance intervenant à sa frontière supérieure est relativement modérée, et donc que le saut d'image dû à cette variation discontinue de puissance lors du passage d'une vision de loin à une vision de près, et réciproquement, est relativement peu accentué et donc en pratique peu gênant pour l'usager.

Ainsi, la lentille ophtalmique progressive suivant l'invention offre un très bon confort visuel, tant en vision statique qu'en vision dynamique.

Elle constitue donc un compromis avantageux entre les lentilles ophtalmiques progressives classiques à rayon de courbure variable et les lentilles ophtalmiques à double foyer, en conjuguant les avantages distincts de l'un et de l'autre de ces deux types de lentilles, tout en minimisant leurs inconvénients respectifs.

En outre, elle a également pour avantage de pouvoir aisément être réalisée suivant les procédés classiques de fabrication des lentilles ophtalmiques progressives et des lentilles ophtalmiques à double foyer.

Les caractéristiques et avantages de la lentille ophtalmique progressive suivant l'invention ressortiront d'ailleurs de la description qui va suivre, à titre d'exemple, en référence aux dessins schématiques annexés sur lesquels :

la figure 1 est une vue en élévation d'une lentille ophtalmique progressive suivant l'invention, selon une première forme de réalisation de celle-ci ;

la figure 2 en est une vue en coupe axiale, suivant la ligne brisée II-II de la figure 1 ;

la figure 3 est un diagramme illustrant l'addition de puissance que présente cette lentille ophtalmique progressive le long de son méridien principal ;

la figure 4 est un diagramme analogue à celui de la figure 3, pour une variante de mise en œuvre de l'invention ;

les figures 5A, 5B, 5C, 5D sont des vues en coupe illustrant diverses phases possibles de fabrication de la lentille ophtalmique progressive représentée à la figure 1 ;

la figure 6 est une vue en coupe analogue à celle de la figure 2 et concerne une variante de réalisation ;

la figure 7 est une vue en coupe illustrant un procédé possible de fabrication pour cette variante de réalisation ;

les figures 8 et 9 sont des diagrammes analogues à celui de la figure 3 et concernent chacune respectivement une variante de mise en œuvre de l'invention ;

la figure 10 est une vue en coupe analogue à celle de la figure 2 et concerne une autre forme de réalisation.

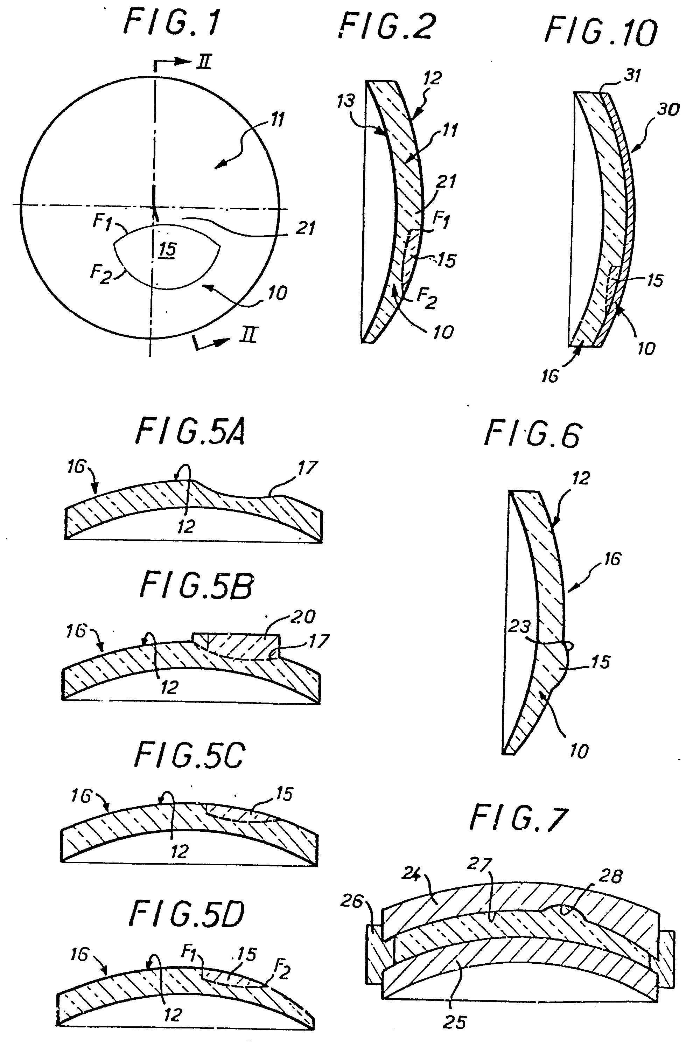

Sur les figures 1 et 2, la lentille suivant l'invention a été représentée avant détourage, c'est-à-dire avant l'opération de débordage qui devra lui être appliquée pour qu'elle puisse être adaptée au contour du cercle ou entourage de la monture de lunettes dans laquelle elle doit être montée ; son contour est donc encore globalement circulaire.

Il s'agit d'une lentille ophtalmique progressive, c'est-à-dire d'une lentille ophtalmique comportant une zone à puissance focale progressivement variable 21 le long de l'un au moins de ses méridiens, qui en constitue le méridien principal, et qui est par exemple celui matérialisé par la ligne de coupe de la figure 2.

Dans la forme de réalisation représentée, cette zone à puissance focale progressivement variable 21 se trouve dans la zone inférieure de la lentille, tandis que la zone supérieure de celle-ci forme une zone à puissance focale constante 11, les deux zones se raccordant l'une l'autre en continu suivant globalement le plan horizontal médian de la lentille.

En pratique, la face avant 12 de la lentille, qui en constitue la face convexe, est donc formée, pour sa partie supérieure, par une surface sphérique, et, pour sa partie inférieure, par une surface dont le rayon de courbure, le long du méridien principal, varie ; par exemple et tel que représenté, ce rayon de courbure va d'abord en décroissant progressivement vers le bas, puis demeure constant.

Conjointement, la face arrière 13 de la lentille, qui en constitue la face concave, est quelconque ; elle peut par exemple être constituée par une surface sphérique, torique ou cylindrique.

Les modalités d'exécution de telles faces avant 12 et arrière 13 sont bien connues par elles-mêmes, et ne faisant pas partie de la présente invention, elles ne seront pas décrites plus en détail ici.

Suivant l'invention, un segment additionnel 15

se trouve optiquement superposé à une portion au moins de la zone inférieure 10 de la lentille, ledit segment additionnel 15 apportant localement un surcroît de puissance par rapport à la zone 21 à puissance focale progressivement variable.

Dans la forme de réalisation représentée sur les figures 1 et 2, qui convient plus particulièrement aux lentilles en matière minérale, ce segment 15 est en une matière différente de celle constitutive du reste de la lentille, et est fusionné au sein même de la zone inférieure 10 de celle-ci, suivant une technique connue par elle-même, qui est celle des lentilles à double foyer, et qui sera maintenant rappelée ci-après, en référence aux figures 5A, 5B, 5C, 5D.

Partant d'un palet 16 propre à constituer la lentille recherchée, figure 5A, on façonne, en creux sur la face convexe 12 de ce palet, un logement 17, qui peut par exemple être un logement sphérique, tel que représenté, ou qui peut être un logement torique, ou encore être un logement quelconque.

Dans ce logement 17, on insère un disque fusible 20 qui, destiné à donner naissance au segment 15 recherché, est pour partie en une matière identique à celle constitutive du palet 16, et pour partie en une matière différente de celle-ci mais susceptible d'être fusionnée avec elle, figure 5B.

On porte l'ensemble à une température suffisante pour en assurer l'adhésion intime par fusion le long de la surface de raccordement commune que forme le logement 17.

On arase le disque 20, pour le mettre à niveau avec la face convexe 12 du palet 16, figure 5C.

On usine alors cette face convexe au profil définitif, partie sphérique, partie progressive, recherché pour celle-ci, figure 5D.

Le segment 15 ainsi obtenu à la surface de la zone inférieure 10 présente par lui-même une puissance focale déterminée.

Bien que la surface extérieure, sur la face convexe 12 de la lentille, de ce segment 15 soit en continuité avec celle de la zone 21 à puissance focale progressivement variable et résulte d'un usinage commun avec celle-ci, la puissance de ce segment 15 peut en pratique être par exemple constante, ou sensiblement constante, et c'est le cas dans la forme de réalisation de l'invention illustrée par les figures 1 à 3.

En effet, les techniques connues d'usinage pour l'obtention d'une surface progressive permettent d'ajuster à la demande les variations de puissance qui en résultent, et il est donc possible de faire que, pour le segment 15, ces variations soient nulles ou quasi nulles, suffisamment faibles en tout cas pour n'être pas sensiblement perçues (inférieures à 0,12 dioptrie par exemple pour la hauteur du segment 15).

Ainsi, dans un tel cas, la lentille présente globalement au droit de la totalité du segment additionnel 15, une puissance focale constante ou sensiblement constante.

Mais, il n'en est pas nécessairement ainsi.

Quoi qu'il en soit, dans la forme de réalisation représentée, une partie au moins de la zone 21 à puissance focale progressivement variable s'étend entre la zone à puissance focale constante 11 et le segment additionnel 15.

Cette zone 21 à puissance focale progressivement variable constitue donc avantageusement une zone de transition entre celle appropriée à la vision de loin, constituée par la zone supérieure à puissance focale constante 11, et celle appropriée à la vision de près, constituée par le segment additionnel 15.

En outre, dans la forme de réalisation représentée, ce segment 15 est légèrement décalé par rapport au méridien vertical de la lentille, pour tenir compte, de manière connue en soi, de la convergence, l'un par rapport à l'autre, des yeux d'un individu lorsqu'il passe d'une vision de loin à une vision de près ; dans l'exemple de réalisation représenté, la lentille concernée correspond à la correction de l'œil droit d'un tel individu.

Sur le diagramme de la figure 3, il a été porté de manière usuelle, en abscisses, l'addition A, c'est-à-dire le surcroît de puissance que présente la zone inférieure 10 de la lentille concernée par rapport à la puissance constante de la zone supérieure 11 de celle-ci, compte tenu de la constitution, décrite ci-dessus, de cette lentille, l'axe des ordonnées figurant le méridien concerné, ou méridien principal, de cette lentille, à savoir celui du plan de coupe de la figure 2.

En absence du segment 15 suivant l'invention, la courbe figurative de l'addition due à la seule zone 21 à puissance focale progressivement variable qui correspond à la puissance focale de la partie inférieure d'une lentille progressive usuelle le long de son méridien principal est celle représentée sous la référence I, partie en trait plein, et partie en traits interrompus.

Il s'agit, dans l'exemple représenté, d'abord d'une droite inclinée, de pente P par rapport à la verticale, à supposer que l'addition en cause varie linéairement, puis d'une droite parallèle à la verticale.

A l'addition ainsi due à la zone 21 à puissance focale progressivement variable se superpose, et donc s'ajoute, l'addition due au segment 15, l'ensemble formant alors la courbe $I_1$.

A la frontière supérieure F1 entre la zone 21 à puissance focale progressivement variable et le segment 15 il y a de ce fait une variation discontinue de puissance, l'addition A2 due au segment 15 venant brutalement s'ajouter à l'addition A1 due à la partie de la zone 21 à puissance focale progressivement variable.

Le segment 15 ayant une puissance constante ou sensiblement constante entre sa frontière supérieure F1 et sa frontière inférieure F2 dans l'exemple de réalisation envisagé, la partie correspondante de courbe représentative de l'addition est une droite verticale.

En pratique, la partie utile de la lentille ne s'étend pas au-delà de la frontière inférieure F2 du segment 15, compte tenu notamment du détourage dont elle est nécessairement l'objet avant son montage sur une monture de lunettes.

Si donc l'on prend en considération la seule addition A entre, d'une part, la zone à puissance focale constante 11 et, d'autre part, la frontière inférieure F2 du segment 15, cette addition A se répartit, suivant l'invention, entre l'addition A1, due à la zone 21 à puissance focale progressivement variable et l'addition A2 due au segment 15.

Dans l'exemple de réalisation représenté, et tel que schématisé en trait plein sur le diagramme de la figure 3, cette répartition se fait sensiblement moitié pour moitié, l'addition A1 étant sensiblement égale à l'addition A2.

Mais il n'en est pas nécessairement ainsi.

Au contraire, en variante, l'addition due au segment 15 peut prendre une valeur A'2 inférieure à la valeur de l'addition A1 due à la seule zone 21 à puissance focale progressivement variable ou une valeur A''2 supérieure à celle de celle-ci ; dans l'un ou l'autre cas l'addition A'1 (ou A''1) de la partie progressive est telle que la somme des additions [A'1 (ou A''1) + A'2 (ou A''2)] soit égale à la somme des additions [A1 + A2] précédentes (non illustré sur les figures).

Quoi qu'il en soit, et ainsi qu'on le notera, pour l'obtention de l'addition A par la seule zone 21 à puissance focale progressivement variable en un point de la lentille correspondant à la frontière F1 du segment 15, il faudrait que cette zone ait une progressivité plus accentuée, tel que l'illustre la droite inclinée de la courbe I'$_1$ du diagramme de la figure 3, dont la pente P' sur la verticale est supérieure à celle P de la droite inclinée de la courbe I$_1$ précédente ; les aberrations dans les zones latérales inférieures de la lentille s'en trouveraient elles aussi plus accentuées, et donc le champ de vision correcte plus réduit.

Dans ce qui précède on a supposé que la hauteur d1 de la zone 21 à puissance focale progressivement variable était la même dans l'un et l'autre cas ; en variante, figure 4, la hauteur d2 de cette zone, dans le cas de la présence du segment additionnel 15, courbe I$_2$, est inférieure à ce qu'elle est, pour la même addition totale, en l'absence d'un tel segment, courbe I'$_2$.

Ainsi qu'on l'aura compris, les courbes I, d'une part, et I'$_1$ ou I'$_2$ d'autre part, correspondent à des lentilles ophtalmiques progressives conventionnelles, par opposition à la courbe I$_1$ ou I$_2$ qui correspond à une lentille suivant l'invention.

Suivant la variante de réalisation illustrée par la figure 6, le segment additionnel 15 suivant l'invention est formé par une excroissance, à surface 23 sphérique par exemple.

En pratique, dans la forme de mise en œuvre représentée, ce segment 15 fait saillie sur la face convexe de la lentille, qui est celle sur laquelle est formée la zone à puissance focale progressivement variable ; mais, en variante, il peut aussi bien faire saillie sur la face opposée de la lentille, et/ou la zone à puissance focale progressivement variable est formée sur celle-ci.

Quoi qu'il en soit, un tel mode de réalisation convient plus particulièrement au cas où la lentille est en matière organique.

Ainsi qu'on le sait, la lentille est dans ce cas réalisée par moulage d'une telle matière organique, entre d'une part un moule concave 24 et d'autre part un moule convexe 25, avec insertion d'un joint 26 à la périphérie de ces moules 24, 25.

Sur la face concave 27 du moule 24 est usinée en négatif la surface à rayon de courbure progressivement variable à obtenir pour la lentille ; il y est en outre usiné, en négatif, un logement 28 propre à la formation du segment 15 recherché.

Comme précédemment, le segment 15 apporte localement un surcroît de puissance.

Dans ce qui précède, il a été supposé que, au droit du segment 15, la lentille avait globalement, pour la totalité de celui-ci, une puissance focale constante ou sensiblement constante.

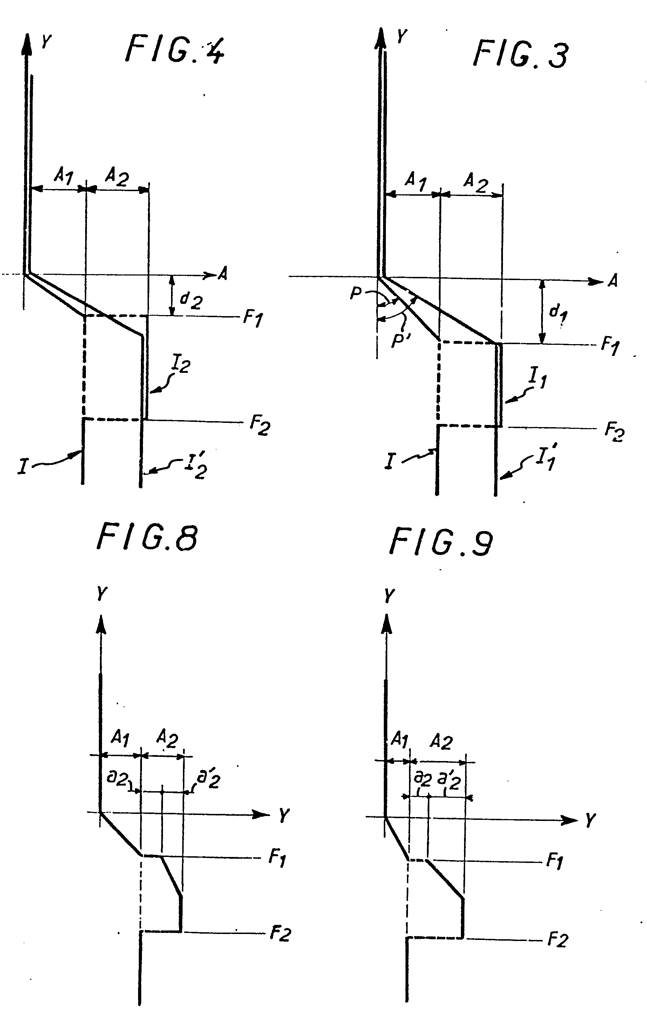

En variante, et tel qu'illustré par les diagrammes des figures 8 et 9, cette puissance focale n'est constante ou sensiblement constante que pour une portion du segment 15.

Par exemple, et tel que représenté, l'addition A2 due globalement à celui-ci résulte d'une part d'une addition brusque de puissance a2 à sa frontière F1 et d'autre part d'une addition progressive de puissance a'2, ce segment étant lui-même à rayon de courbure variable dans sa partie supérieure ; les additions a2, a'2 peuvent être égales, figure 8, ou différentes, figure 9.

Dans les formes de réalisation de l'invention décrites ci-dessus, il a été supposé que le segment additionnel 15 et la zone 21 à puissance focale progressivement variable appartenaient à un même palet 16, celui-ci constituant à lui seul la lentille concernée.

Suivant la forme de réalisation illustrée par la figure 10, le segment additionnel 15 appartient au palet 16, qui forme un palet de base, et la zone 21 à puissance focale progressivement variable appartient à une pellicule de surface 30 superposée au palet 16.

Bien entendu, comme précédemment, le segment additionnel est de préférence fusionné au palet 16.

De même, la pellicule de surface 30, qui est, de préférence, en un verre ayant le même indice que celui du verre constituant la majeure partie du palet 16, peut être fusionnée à celui-ci ; en variante, elle peut lui être simplement collée.

Quoi qu'il en soit, la surface 31 par laquelle la pellicule de surface 30 est superposée au palet de base 16, surface 31 qui constitue la face concave de ladite pellicule de surface 30 et la face convexe dudit palet de base 16, est de préférence une surface sphérique.

Conjointement, la face convexe de la pellicule de surface 30 est celle dont le profil est conformé de manière à obtenir la zone 21 à puissance focale progressivement variable recherchée.

Ainsi se trouvent avantageusement dissociées les parties de la lentille suivant l'invention dans lesquelles se trouvent mis en œuvre un segment additionnel, d'une part, et une zone à puissance focale progressivement variable, d'autre part, lesdites parties nécessitant pour leur réalisation des techniques de fabrication spécifiques individuellement bien maîtrisées.

L'épaisseur de la pellicule de surface 30 est quelconque. Elle peut par exemple n'être qu'une fraction de celle du palet de base 16, tel que représenté.

Bien entendu, la présente invention ne se limite cependant pas aux formes de réalisation décrites et représentées, mais englobe toute variante.

## Revendications

1. Lentille ophtalmique progressive du genre comportant une zone supérieure (11) à puissance focale constante et une zone inférieure (10) possédant une zone (21) adjacente à la zone supérieure (11) et à puissance focale progressivement variable le long de l'un au moins de ses méridiens, zone inférieure (10) sur une portion de laquelle un segment additionnel (15) se trouve optiquement superposé, caractérisée en ce que le segment additionnel (15) apporte localement un surcroît de puissance par rapport à la puissance de ladite zone (21) à puissance focale progressivement variable, avec, à la frontière supérieure ($F_1$) entre la zone (21) à puissance focale progressivement variable et le segment additionnel (15), une variation discontinue de puissance.

2. Lentille ophtalmique progressive suivant la revendication 1, caractérisée en ce que, au droit d'une portion au moins du segment additionnel (15), elle a globalement une puissance focale constante ou sensiblement constante.

3. Lentille ophtalmique progressive suivant la revendication 1, caractérisée en ce que, au droit du segment additionnel (15), sa puissance focale n'est constante que pour une portion dudit segment additionnel, une partie de celui-ci étant à rayon de courbure variable.

4. Lentille ophtalmique progressive suivant l'une quelconque des revendications 1 à 3, caractérisée en ce qu'une partie au moins de la zone (21) à puissance focale progressivement variable s'étend entre la zone à puissance focale constante (11) et le segment additionnel (15).

5. Lentille ophtalmique progressive suivant l'une quelconque des revendications 1 à 4, caractérisée en ce que son segment additionnel (15) appartient à un palet de base (16), et sa zone (21) à puissance focale progressivement variable appartient à une pellicule de surface (30) superposée audit palet (16).

6. Lentille ophtalmique progressive suivant la revendication 5, caractérisée en ce que la surface (31) par laquelle la pellicule de surface (30) est superposée au palet de base (16) est une surface sphérique.

## Claims

1. A progressive ophthalmic lens of the kind comprising an upper zone (11) having a constant focal power and a lower zone (10) which has a zone (21) adjacent to the upper zone (11) having a focal power progressively variable along at least one of its meridians, an additional segment (15) being optically superposed on a portion of the lower zone (10), characterized in that the additional segment (15) provides, locally, an addition of power with respect to the power of the said zone (21) having a progressively variable focal power, with a discontinuous variation of power at the upper boundary (FI) between the zone (21) having a progressively variable focal power and the additional segment (15).

2. A progressive ophthalmic lens according to claim 1, characterized in that, in line with a least a portion of the additional segment (15) the lens generally has a constant or substantially constant focal power.

3. A progressive ophthalmic lens according to claim 1, characterized in that, in line with the additional segment (15) the focal power of the lens is constant only for a portion of the said additional segment, a part of the additional segment having a variable radius of curvature.

4. A progressive ophthalmic lens according to any one of claims 1 to 3, characterized in that one part, at least, of the zone (21) having a variable focal power extends between the zone having a constant focal power and the additional segment (15).

5. A progressive ophthalmic lens according to any one of claims 1 to 4, characterized in that the additional segment (15) belongs to a base blank (16) and the zone (21) having a progressively variable focal power belongs to a surface film (30) superposed on the said base blank (16).

6. A progressive ophthalmic lens according to claim 5, characterized in that the surface (31) by which the surface film (30) is superposed on the base blank (16) is spherical.

## Ansprüche

1. Progressive Augenlinse mit einer oberen Zone (11) mit konstanter Brechkraft und einer unteren Zone (10), die eine Zone (21) umfaßt, die an die obere Zone (11) angrenzt und entlang wenigstens eines ihrer Meridiane eine progressiv variable Brechkraft aufweist, wobei auf einem Teil derunteren Zone (10) ein zusätzliches Segment (15) optisch überlagert ist, dadurch gekennzeichnet, daß das zusätzliche Segment (15) örtlich eine Zunahme der Brechkraft in bezug auf die Brechkraft der Zone (21) mit progressiv variabler Brechkraft beiträgt mit einer diskontinuierlichen Brechkraftänderung an der oberen Grenzlinie ($F_1$) zwischen der Zone (21) mit progressiv variabler Brechkraft und dem zusätzlichen Segment (15).

2. Progressive Augenlinse nach Anspruch 1, dadurch gekennzeichnet, daß sie an der Stelle wenigstens eines Teils des zusätzlichen Segments (15) global eine konstante oder im wesentlichen konstante Brechkraft aufweist.

3. Progressive Augenlinse nach Anspruch 1, dadurch gekennzeichnet, daß ihre Brechkraft am Ort des zusätzlichen Segments (15) nur über einen Teil des zusätzlichen Segments konstant ist, wobei ein Teil von diesem einen variablen Krümmungsradius aufweist.

4. Progressive Augenlinse nach einem der Ansprüche 1 bis 3, dadurch gekennzeichnet, daß sich wenigstens ein Teil der Zone (21) mit progressiv variabler Brechkraft zwischen der Zone (21) mit konstanter Brechkraft und dem zusätzlichen Segment (15) erstreckt.

5. Progressive Augenlinse nach einem der Ansprüche 1 bis 4, dadurch gekennzeichnet, daß ihr zusätzliches Segment (15) zu einer Basisscheibe (16) und ihre Zone (21) mit progressiv variabler Brechkraft zu einem der Scheibe (16) überlagerten Oberflächen-Überzug (30) gehört.

6. Progressive Augenlinse nach Anspruch 5, dadurch gekennzeichnet, daß die Fläche (31), über die der Oberflächenüberzug (30) der Basisscheibe (16) überlagert ist, eine sphärische Fläche ist.

0 039 284

FIG.1

FIG.2

FIG.10

FIG.5A

FIG.5B

FIG.5C

FIG.5D

FIG.6

FIG.7

FIG.4

FIG.3

FIG.8

FIG.9